# EUROPÄISCHE PATENTSCHRIFT

(11) **EP 0 783 911 B1**
(45) Veröffentlichungstag und Bekanntmachung des Hinweises auf die Patenterteilung: **11.09.2002**
(21) Anmeldenummer: 97100326.4
(22) Anmeldetag: 10.01.1997
(51) Int. Cl.: B01D 3/32, B01D 53/18

(54) **Flüssigkeitsverteiler für eine Gegenstromkolonne**
Liquid distributor for a counter-current column
Répartition de liquide pour une colonne à contre-courant

(30) Priorität: 11.01.1996 DE 19600763
(43) Veröffentlichungstag der Anmeldung: 16.07.1997
(73) Patentinhaber: JULIUS MONTZ GmbH, D-40723 Hilden (DE)
(72) Erfinder: Streuber, Hans Peter, 42699 Solingen (DE)
(74) Vertreter: COHAUSZ DAWIDOWICZ HANNIG & PARTNER

(56) Entgegenhaltungen:
- EP-A- 0 013 284
- EP-A- 0 586 780
- DE-A- 1 542 528

## Beschreibung

Die Erfindung betrifft einen Rinnenverteiler für Stoffaustauschkolonnen mit mehreren parallel nebeneinander liegenden U-förmigen Verteilerrinnen, die von einem darüber liegenden Vorverteilersystem mit Flüssigkeit beschickt werden.

Die U-förmigen Verteilerrinnen werden bekannterweise aus Blechen gekantet. Ihr Querschnitt und ihre Bauhöhe richtet sich nach der Flüssigkeitsbeaufschlagung und dem Belastungsbereich. Sofern an den hochstehenden Schenkeln der U-Profile zusätzliche Schraubverbindungen, wie aus EP 0586780 B1 bekannt, angebracht werden müssen, ist dies bei der Breite der Rinnen ebenfalls zu berücksichtigen.

Sehr schmale U-förmige Verteilerrinnen, die aus Blechen gekantet werden, sind nicht gut zugänglich. Das Anschrauben von Seitenwänden ist nur mit großem Aufwand möglich. Um einen großen Belastungsbereich abzudecken, müssen die Verteilerrinnen eine große Höhe aufweisen, was sich auf die Fertigungskosten ungünstig auswirkt.

Sofern die Flüssigkeitsverteilung in den Verteilerrinnen durch Bohrungen erfolgt, die unter Staudruck stehen, führt dies bei geringer Flüssigkeitsbelastung und einer größeren Zahl von Bohrungen zu sehr kleinen Lochdurchmessern. Die Gefahr der Verschmutzung und damit Verstopfung ist groß.

Der Flüssigkeitsspiegel in den Rinnen darf nicht gestört werden und muß an allen Ablaufstellen gleich hoch sein. Ein Flüssigkeitsgradient ist zu vermeiden.

Aufgabe der Erfindung ist es eine Verteilerrinne zu schaffen, die bei geringer Bauhöhe sehr schmal gehalten werden kann, ohne jede Schweißarbeit aus dünnen Blechen, maschinell mit größter Genauigkeit, billig hergestellt werden kann, über eine obere Flüssigkeitszufuhrrinne verfügt und im Hinblick auf kleine Flüssigkeitsbelastungen die unter Staudruck stehenden Bohrungen auf dem Verteilerboden erheblich reduziert.

Diese Aufgabe wird erfindungsgemäß dadurch gelöst, daß die Verteilerrinne zwei senkrechte, zueinander parallele Bleche aufweist, die unter Verwendung mindestens einer unteren Dichtung insbesondere Distanzleiste an der Unterseite und insbesondere an den Enden dieser Bleche, flüssigkeitsdicht befestigt insbesondere zusamengeschraubt sind. Die beiden Bleche können hierbei in ihrem oberen Abschnitt so ausgebildet sein, daß sich nach dem Zusammenschrauben derselben eine zusätzliche Flüssigkeitszufuhrrinne ergibt.

Die vorgeschlagene Bauweise des Verteilerbodens ist vor allem für sehr geringe bis mittlere Flüssigkeitsbelastungen geeignet. Sie bietet gegenüber den bekannten Konstruktionen erhebliche Vorteile. Diese bestehen darin, daß die Verteilerrinne nach dem Baukastenprinzip, ohne Schweißarbeiten sehr schmal und niedrig gehalten hergestellt werden kann. Eine integrierte Flüssigkeitszuführungsrinne vermeidet ein Flüssigkeitsgefälle in der Verteilerrinne und sorgt für einen beruhigten Zufluß zu den Endausflußöffnungen. Der Zufluß in die Verteilerrinne oder deren Abschnitte ist auf wenige, entsprechend größere Löcher beschränkt, was die Verschmutzungsgefahr vermindert. Der Belastungsbereich des Verteilerbodens kann über die Stauhöhe im Vorverteilersystem bzw. durch Freigabe zusätzlicher Löcher leicht verändert werden.

Weitere vorteilhafte Ausgestaltungen der Erfindung sind in den Unteransprüchen aufgeführt.

Ausführungsbeispiele der Erfindung sind in den Zeichnungen dargestellt und sind im folgenden näher beschrieben.

Es zeigen:

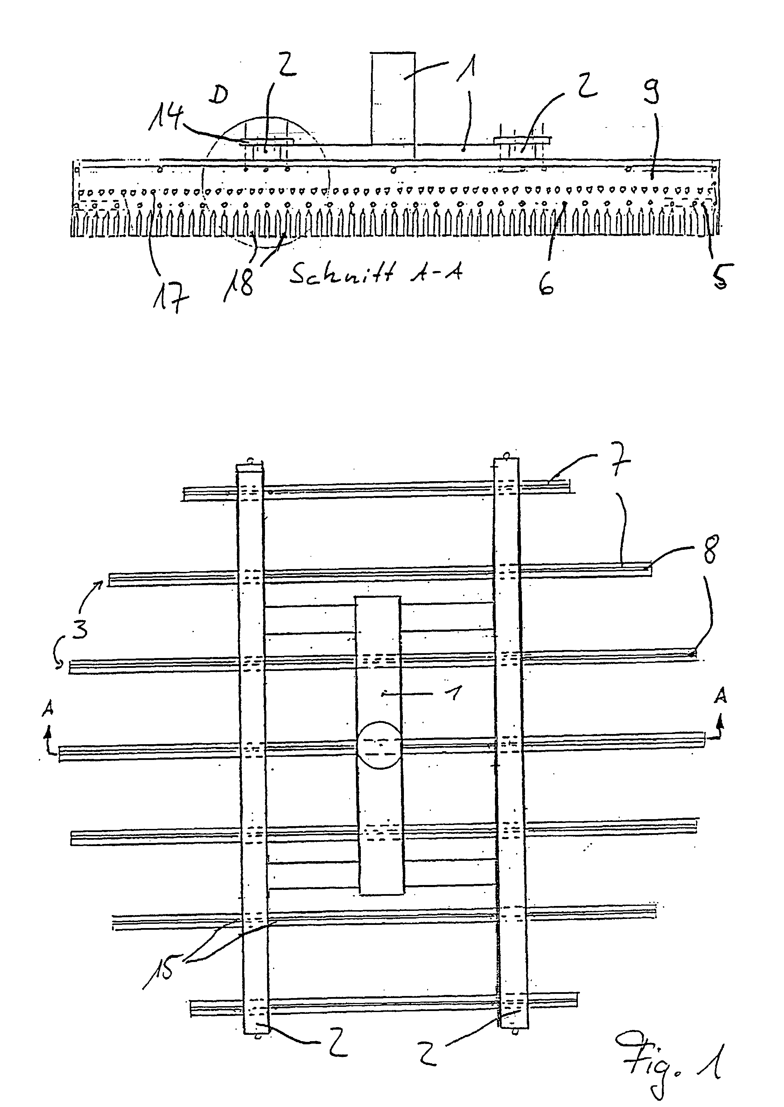

- Fig. 1: Einen Verteilerboden in der Draufsicht und im Schnitt A-A.

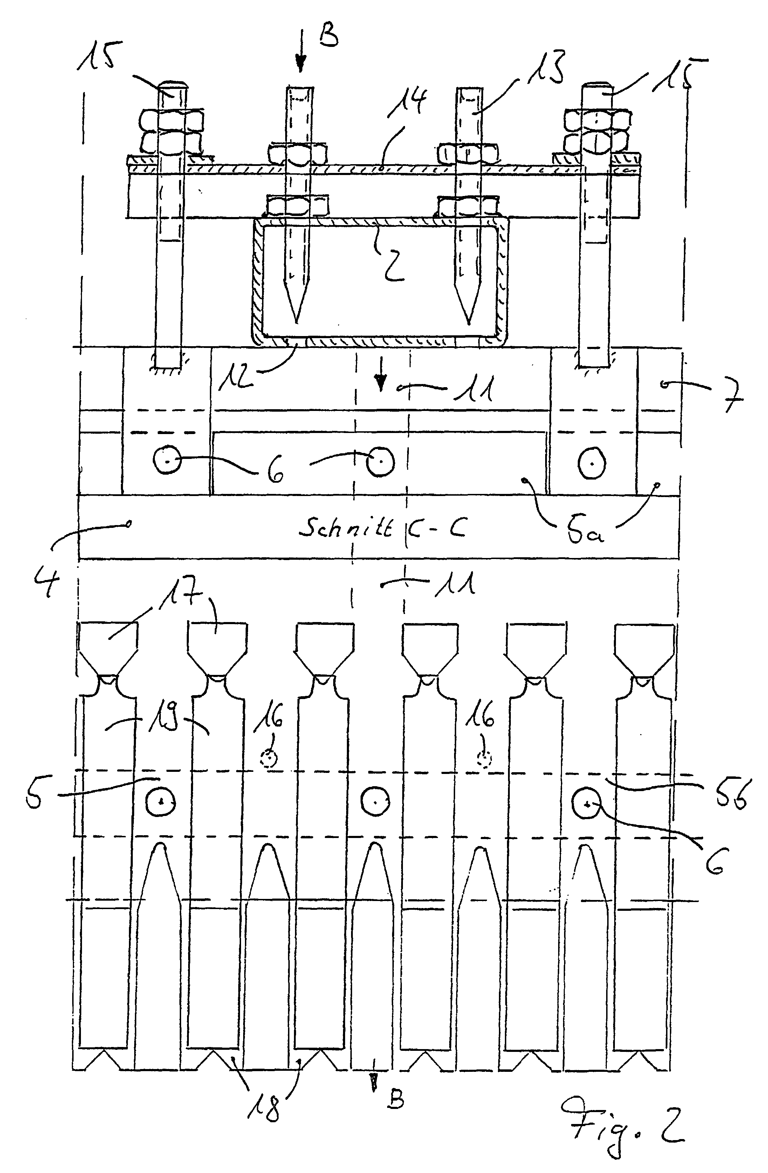

- Fig. 2: Den Ausschnitt D im Maßstab 1:1 aus Figur 1.

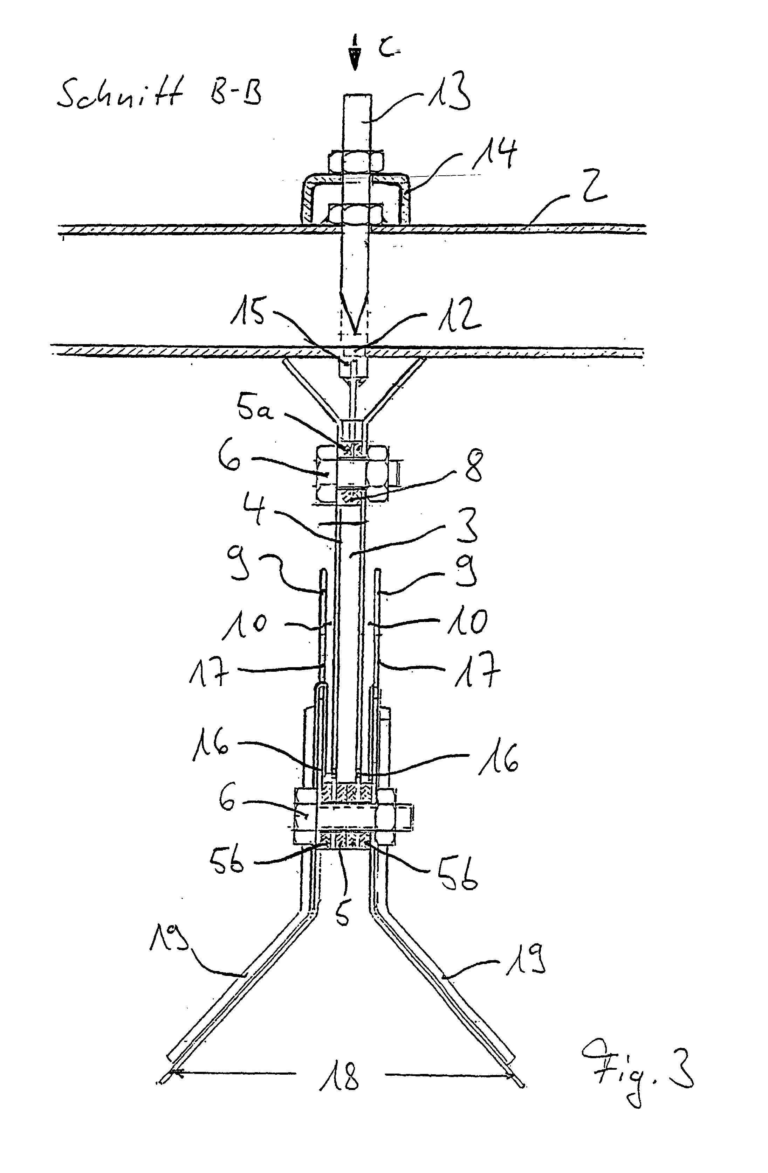

- Fig. 3: Einen Schnitt nach B-B in Figur 2.
- Fig. 4: Eine alternative Ausführung des Verteilerbodens bei Anbindung der Verteilerrinne an ein oben offenes Profil mit Halterung des Vorverteilers.
- Fig. 5: Den Bereich einer rechteckigen Flüssigkeitsaustrittsöffnung des Vorverteilers über der Verteilerrinne mit verstellbarem Schieber im senkrechten und waagerechten Schnitt.

Der Verteilerboden weist ein oberes Vorverteilssystem 1 auf an welches ein oder mehrere Profile 2 angebunden sind. Diese Profile 2 versorgen die darunterliegenden Verteilerrinnen 3 mit Flüssigkeit und dienen gleichzeitig als Träger der Verteilerrinnen. Diese werden durch je zwei senkrechte Bleche 4 und untere Dichtungen bzw. Distanzleisten 5, sowie Schrauben 6 hergestellt. Die Dicke der Distanzleisten 5 bestimmt den Abstand der Bleche 4 voneinander und damit die Weite der Verteilerrinne 3. In ihrem oberen Abschnitt sind die Bleche 4 so ausgebildet, daß sich nach dem Zusammenschrauben der Einzelteile eine obere Flüssigkeitszuführrinne 7 ergibt. Die Distanzleisten 5a im oberen Abschnitt sind so zueinander im Abstand befestigt, daß sich über die Gesamtlänge der Zuführrinne 7 ein durchgehender schmaler senkrechter Spalt 8 ergibt. Es können in den oberen senkrechten Distanzleisten 5a aber auch einzelne, in gleichmäßigen Abständen angeordnete Durchgangsöffnungen zur Verteilerrinne 3 hergestellt werden. Durch eine zentrisch zwischen den Blechen 4 liegende Distanzleiste 5a, die auch aus einem Rund- bzw. Vierkantprofil bestehen kann, ergeben sich über die Gesamtlänge der Zuführrinne 7 zwei Spalte.

Der Spalt 8 kann mit Drahtgewebe oder Streckmetall ausgefüllt werden. Im Falle von angeschraubten Seitenwänden 9 und damit gebildeten Seitenkanälen 10 können die Verteilerrinnen 3 durch Dichtungen 11 in gleicher Weise wie die Seitenkanäle 10 in einzelne Abschnitte unterteilt werden. Eine Unterteilung der Verteilerrinnen kann auch separat erfolgen.

Der Zufluß in die Zuführungsrinne 7 erfolgt durch Bohrungen 12 in den Profilen 2, jeweils auf Achse der Verteilerrinnen 3. Diese Bohrungen 12 sind in ihrem Durchmesser auf die Länge der Verteilerrinnen 3 bzw. deren einzelne Abschnitte abgestimmt. Eine oder mehrere dieser Bohrungen können durch Stellschrauben 13 verschlossen bzw. verändert werden. An diesen Stellschrauben ist gleichzeitig eine Halterung 14 angebracht, an der die Verteilerrinnen 3 mit Augenschrauben 15 befestigt werden. Diese Augenschrauben 15 sind zwischen den Blechen 4 eingespannt.

Die Verteilerrinnen 3 können zusätzlich mit Dichtungen 5b und angeschraubten Seitenwänden 9 versehen werden. Die Bohrungen 16 in den Blechen 4 der Verteilerrinne 3 können dann auf die maximale Flüssigkeitsmenge abgestimmt werden oder auch im Durchmesser größer sein als für die maximale Belastung notwendig. Der Flüssigkeitsaustritt aus den Seitenkanälen 10 erfolgt durch Öffnungen 17 und die weitere Flüssigkeitsführung über Ablaufzungen 18 mit Hilfe von Heber- und Leitelementen 19.

Die Anbindung der Verteilerrinnen 3 an ein oder mehrere, oben offene U-förmige Profile 2, die ebenfalls als Träger dienen, erfolgt über Schlaufen 20, die mit einem U-Profil 21 verbunden sind und mittels Schrauben am Profil 2a befestigt werden. Von den in den Seitenwänden des Profils 2a angebrachten Bohrungen 12a können einzelne oder auch mehrere durch Stellschrauben 13a verschlossen bzw. verändert werden.

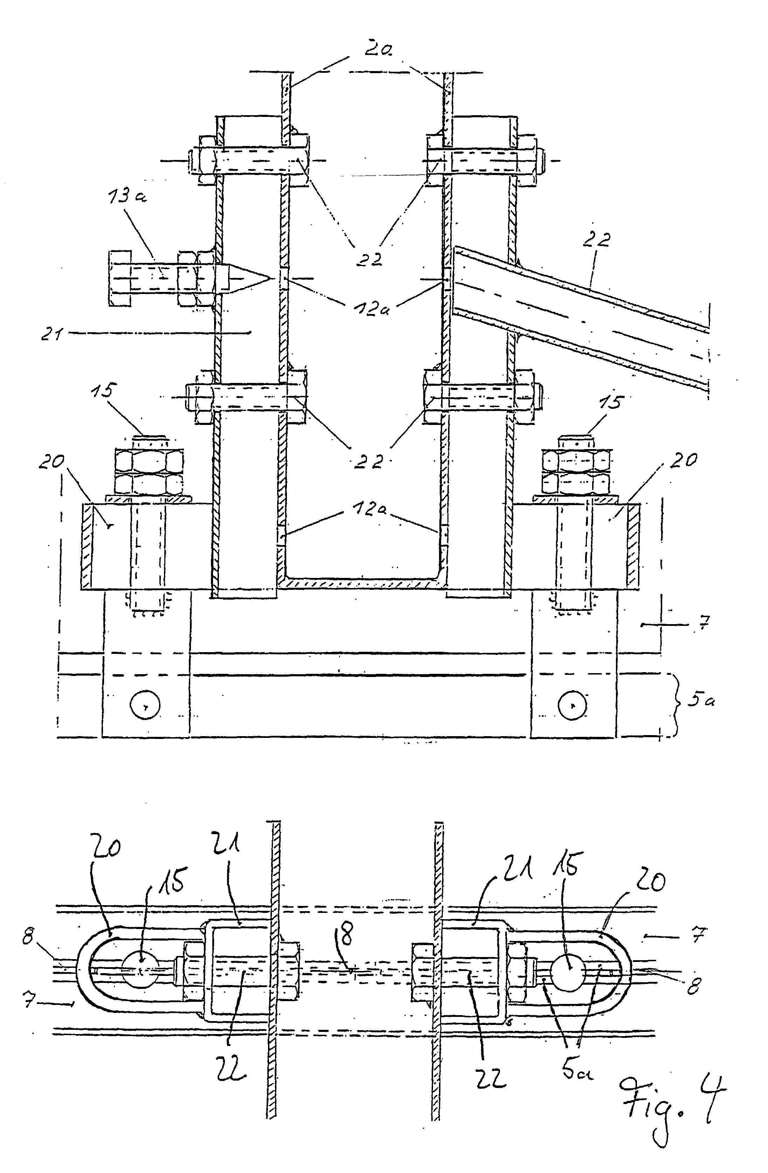

Flüssigkeit, die durch höherliegende Bohrungen aus dem Profil 2a des Vorverteilers austritt, kann durch ein schräges Rohr 22, welches mit dem U-Profil 21 fest verschweißt ist, in die Flüssigkeitszuführrinne 7 geleitet werden. Auf diese Weise wird der Flüssigkeitsgradient in dieser Rinne 7 abgebaut und die Vorverteilung weiter verbessert (Figur 4).

Eine Unterteilung der durchgehenden Verteilerrinne und gegebenenfalls deren Seitenkanäle in einzelne Abschnitte, welche mit der darauf abgestimmten Flüssigkeitsmenge versorgt werden, vermindert die Fehlverteilung auf größeren Verteilerböden infolge Schwankung der Kolonne oder Abweichung von der Horizontalen.

Die Elemente sind maschinell mit größter Genauigkeit herstellbar, vollständig zerlegbar und damit leicht zu reinigen.

Der Verteilerboden hat ein besseres Öffnungsverhältnis und der Druckverlust ist geringer. Leichtbauweise und geringerer Flüssigkeitsinhalt ergeben ein wesentlich geringeres Betriebsgewicht. Für angeschraubte Seitenwände ist nur die halbe Schraubenzahl erforderlich. Die Montage ist einfach und erfordert nur einen geringen Zeitaufwand.

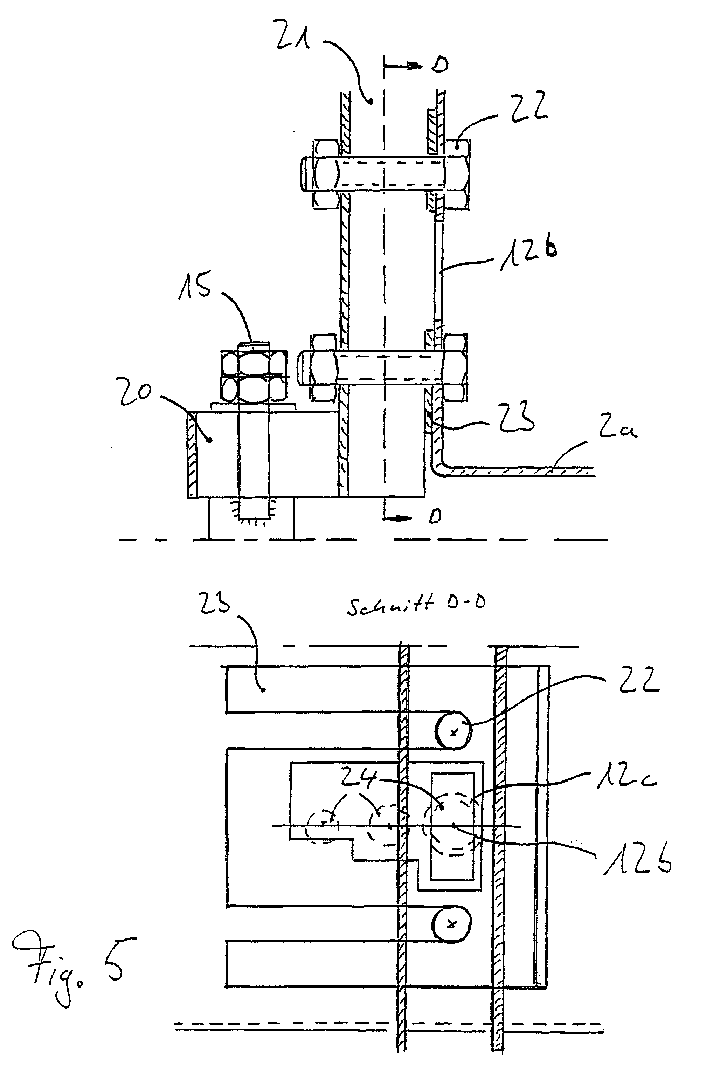

Die an den Seitenwänden der Profile 2a angebrachten Flüssigkeitsaustrittsöffnungen 12b können einen rechteckigen Querschnitt haben. Sie sind gleich hoch und in ihrer Breite auf die Länge der Verteilerrinnen 3 bzw. der einzelnen Abschnitte abgestimmt. Mit Hilfe eines Schiebers 23, der mehrere Abstufungen aufweist, können die Öffnungen 12b und damit der Belastungsbereich des Verteilerbodens verändert werden. Der Schieber 23 wird zwischen dem U-förmigen Profil 21 und dem Profil 2a eingeklemmt (Fig. 5). Der Schieber 23 kann auch mit Löchern unterschiedlichen Durchmessers 24, die nebeneinander auf gleicher Höhe liegen, versehen werden. Mit Hilfe des Schiebers kann dann eine runde Austrittsöffnung im Profil 2a, 12a, die einen größeren Durchmesser aufweist als das größte Loch im Schieber, verändert werden.

## Patentansprüche

1. Rinnenverteiler für Stoffaustauschkolonnen mit mehreren parallel nebeneinander liegenden U-förmigen Verteilerrinnen (3), die mit einem darüber liegenden Vorverteilersystem (1+2) verbunden sind, um von diesem Flüssigkeit zu erhalten, **dadurch gekennzeichnet, daß** jede Verteilerrinne (3) zwei senkrechte, zueinander parallele Bleche (4) aufweist, die unter Verwendung mindestens einer unteren Dichtung insbesondere Distanzleiste (5) an der Unterseite und insbesondere an den Enden dieser Bleche, flüssigkeitsdicht befestigt insbesondere zusammengeschraubt sind.

2. Rinnenverteiler nach Anspruch 1, **dadurch gekennzeichnet, daß** zwei Bleche (4) in ihrem oberen Bereich nach dem Befestigen derselben mit Hilfe mindestens einer oberen Distanzleiste (5a) eine obere Flüssigkeitszuführungsrinne (7) bilden.

3. Rinnenverteiler nach Anspruch 2, **dadurch gekennzeichnet , daß** die oberen Distanzleisten (5a) einen oder zwei durchgehende schmale Spalte (8) oder einzelne in gleichmäßigen Abständen angeordnete Durchgangsöffnungen zur Verteilerrinne (3) bzw. zur Abgaberinne hin bilden.

4. Rinnenverteiler nach Anspruch 3, **dadurch gekennzeichnet, daß** der oder die durchgehenden schmalen Spalten (8) der Flüssigkeitszuführungsrinne (7) mit Drahtgewebe oder Streckmetall ausgefüllt ist/sind.

5. Rinnenverteiler nach einem der vorherigen Ansprüche, **dadurch gekennzeichnet, daß** die Verteilerrinne (3) durch Dichtungen (11) in einzelne Abschnitte aufgeteilt ist.

6. Rinnenverteiler nach einem der Ansprüche 2 bis 4, **dadurch gekennzeichnet, daß** der Zufluß in die Flüssigkeitszuführungsrinnen (7) aus dem Vorverteilersystem durch Bohrungen (12) erfolgt, deren Durchmesser auf die Länge der Verteilerrinnen bzw. deren einzelne Abschnitte abgestimmt ist.

7. Rinnenverteiler nach Anspruch 6, **dadurch gekennzeichnet, daß** zumindest ein Teil der Bohrungen (12) mit Hilfe von Stellschrauben (13) schließbar oder veränderbar ist.

8. Rinnenverteiler nach Anspruch 7, **dadurch gekennzeichnet, daß** an den Stellschrauben (13) eine Halterung (14) angebracht ist, an der die Verteilerrinne (3) durch Augenschrauben (15) befestigt ist.

9. Rinnenverteiler nach Anspruch 8, **dadurch gekennzeichnet , daß** die Augenschrauben (15) zwischen die beiden Bleche (4) der Verteilerrinne (3) eingespannt sind.

10. Rinnenverteiler nach Anspruch 8 , **dadurch gekennzeichnet, daß** die Halterung (14) der Verteilerrinne (3) an einem oder mehreren oben offenen Profilen (2a) der Vorverteilerrinne (2) über Schlaufen (20) erfolgt, die mit einem U-Profil (21) fest verbunden und mittels Schrauben oder Schweißung an den hochstehenden Schenkeln der Profile (2a) befestigt sind.

11. Rinnenverteiler nach Anspruch 10, **dadurch gekennzeichnet, daß** die Flüssigkeit, die aus einer höherliegenden Bohrung aus dem Profil (2a) der Vorverteilerrinne (2) austritt, über ein Rohr oder eine offene Rinne, in die Flüssigkeitszuführrinne (7) geleitet ist.

12. Rinnenverteiler nach einem der vorherigen Ansprüche, **dadurch gekennzeichnet, daß** eine oder mehrere Öffnungen (12b) des Vorverteilers mit vorzugsweise rechteckigem Querschnitt über einer Verteilerrinne (3) durch einen Schieber (23) in ihrer Größe veränderbar sind.

## Claims

1. A liquid distributor for counter-current columns with a plurality of parallel, adjacent U-section distribution channels (3) which are connected to a superposed pre-distribution system (1 and 2) to receive liquid therefrom, **characterised in that** each distribution channel has two vertical, parallel sheet-metal elements (4) which are fixed, in particular screwed, together in a liquid-tight manner with the use of at least one lower seal, in particular spacer strip (5), at the bottom and in particular at the ends of said sheet-metal elements.

2. A liquid distributor according to Claim 1, **characterised in that** after being fixed together two sheet-metal elements (4) form in their upper portion an upper fluid supply channel (7) by means of at least one upper spacer strip (5a).

3. A liquid distributor according to Claim 2, **characterised in that** the upper spacer strips (5a) form one or two continuous narrow gaps (8) or separate apertures arranged at regular intervals opening into the distribution channel (3) or the delivery channel.

4. A liquid distributor according to Claim 3, **characterised in that** the continuous narrow gap or gaps (8) of the liquid supply channel (7) is/are covered with wire mesh or expanded metal.

5. A liquid distributor according to one of the preceding claims, **characterised in that** the distribution channel (3) is divided into separate sections by seals (11).

6. A liquid distributor according to one of the claims 2 to 4, **characterised in that** liquid flows from the pre-distribution system into the liquid supply channels (7) through bore-holes (12) the diameter of which is co-ordinated with the length of the distribution channels or of their separate sections.

7. A liquid distributor according to Claim 6, **characterised in that** at least some of the bore-holes (12) are closable or variable by means of adjusting screws (13).

8. A liquid distributor according to Claim 7, **characterised in that** a mounting device (14) to which the distribution channel (3) is fixed by eye bolts (15) is attached to the adjusting screws (13).

9. A liquid distributor according to Claim 8, **characterised in that** the eye bolts (15) are fixed between the two sheet-metal elements (4) of the distribution channel (3).

10. A liquid distributor according to Claim 8, **characterised in that** the mounting device (14) of the distribution channel (3) is formed by one or more upwardly open profile sections (2a) of the pre-distribution channel (2) or by loops rigidly attached to a U-section (21) and fixed by means of screws or welding to the upwardly projecting sides of the profile sections (2a).

11. A liquid distributor according to Claim 10, **characterised in that** the liquid issuing from a higher-placed bore-hole in the profile section (2a) of the pre-distribution channel (2) is conducted via a pipe or an open channel into the fluid supply channel (7).

12. A liquid distributor according to one of the preceding claims, **characterised in that** the size of one or more apertures (12b) of the pre-distributor with a preferably rectangular cross-section above a distribution channel (3) can be varied by means of a sliding part (23).

## Revendications

1. Répartiteur de conduits pour colonnes de transfert de matière avec plusieurs conduits de répartition (3) en forme de U disposés parallèlement côte à côte, qui sont reliés à un système prérépartiteur (1 + 2) pour recevoir du liquide de celui-ci,
**caractérisé en ce que** chaque conduit de répartition (3) présente deux tôles (4) verticales parallèles entre elles qui sont fixées, en particulier vissées, ensemble de manière étanche aux liquides en utilisant au moins un joint d'étanchéité inférieur, en particulier un liteau d'écartement (5), sur la face inférieure et en particulier aux extrémités de ces tôles.

2. Répartiteur de conduits selon la revendication 1,
**caractérisé en ce que** deux tôles (4) forment dans leur zone supérieure, après fixation de celles-ci à l'aide d'au moins un liteau d'écartement (5a) supérieur, un conduit d'amenée de liquide (7) supérieur.

3. Répartiteur de conduits selon la revendication 2,
**caractérisé en ce que** les liteaux d'écartement (5a) supérieurs forment une ou deux fentes (8) étroites continues ou des ouvertures de passage individuelles disposées à des écartements uniformes en direction du conduit de répartition (3) ou respectivement du conduit de dégagement.

4. Répartiteur de conduits selon la revendication 3,
**caractérisé en ce que** la ou les fentes (8) étroites continues du conduit d'amenée de liquide (7) est/sont remplie(s) de tissu métallique ou de métal déployé.

5. Répartiteur de conduits selon l'une des revendications précédentes,
**caractérisé en ce que** le conduit de répartition (3) est divisé en sections individuelles par des joints d'étanchéité (11).

6. Répartiteur de conduits selon l'une des revendications 2 à 4,
**caractérisé en ce que** l'affluence dans les conduits d'amenée de liquide (7) depuis le système prérépartiteur est effectué à travers des alésages (12) dont le diamètre est adapté à la longueur des conduits de répartition ou respectivement de leurs sections individuelles.

7. Répartiteur de conduits selon la revendication 6,
**caractérisé en ce qu'**au moins une partie des alésages (12) peut être fermée ou modifiée à l'aide de vis de réglage (13).

8. Répartiteur de conduits selon la revendication 7,
**caractérisé en ce qu'**un serrage (14) est monté sur les vis de réglage (13), sur lequel le conduit de répartition (3) est fixé par des boulons à oeillet (15).

9. Répartiteur de conduits selon la revendication 8,
**caractérisé en ce que** les boulons à oeillet (15) sont encastrés entre les deux tôles (4) du conduit de répartition (3).

10. Répartiteur de conduits selon la revendication 8,
**caractérisé en ce que** le serrage (14) du conduit de répartition (3) s'effectue à un ou plusieurs profilés (2a) ouverts vers le haut du conduit de prérépartition (2) par des crochets fermés (20) qui sont reliés de manière fixe à un profilé en U (21) et sont fixés au moyen de vis ou par soudage aux ailes supérieures des profilés (2a).

11. Répartiteur de conduits selon la revendication 10,
**caractérisé en ce que** le liquide qui sort par un alésage disposé plus haut du profilé (2a) du conduit de prérépartition (2) est guidé dans le conduit d'amenée de liquide (7) par un tube ou un conduit ouvert.

12. Répartiteur de conduits selon l'une des revendications précédentes,
**caractérisé en ce qu'**une ou plusieurs ouvertures (12b) du prérépartiteur, à section transversale de préférence rectangulaire, sur un conduit de répartition (3), sont modifiables en grandeur par une coulisse (23).
